# EUROPEAN PATENT SPECIFICATION

(11) **EP 0 489 783 B1**
(45) Date of publication and mention of the grant of the patent: **06.07.1994**
(21) Application number: 90912761.5
(22) Date of filing: 15.08.1990
(51) Int. Cl.: B08B 3/02

(54) **A CLEANING PROCEDURE AND APPARATUS**
REINIGUNGSVERFAHREN UND -VORRICHTUNG
PROCEDE ET APPAREIL DE NETTOYAGE

(30) Priority: 16.08.1989 DK 4017/89
(43) Date of publication of application: 17.06.1992
(73) Proprietor: O & J HOJTRYK A/S, 6700 Esbjerg (DK)
(72) Inventor: PEDERSEN, Benny, DK-6710 Esbjerg V (DK); SIHM, Kurt, DK-6710 Esbjerg V (DK)
(74) Representative: Skoett-Jensen, Knud
(86) International application number: PCT/DK90/00207
(87) International publication number: WO 91/02600

(56) References cited:
- DE-A- 3 518 988
- GB-A- 2 223 308
- US-A- 3 526 237
- US-A- 3 840 402
- US-A- 4 299 245

## Description

The present invention relates to a cleaning procedure and an apparatus for cleaning of clogged holes or passages of small diameter, such as through-holes of varying sizes, in particular such holes in dies provided with a large amount of such holes for through-pressing of materials for the manufacturing of pellets, such as dies employed at pelletizing of feed stuff pellets.

Without limiting the invention to dies for pelletizing of feed pellets, in the following the invention is described mainly under reference as being employed to dies of that kind.

Such dies for pelletizing may be embodied with a length in axial direction of .15 through .25 m and a diameter of about .4 through .6 m being made as cylindric elements of steel with a material thickness of about .05 through .15 m provided in radial direction with a large amount of drilled through-holes or passages exhibiting each a light of about 1.3 through 10 mm. Generally, the holes or the passages are drilled, as from the periphery of the cylindric elements by means of a precisely guided drilling machinery, with the holes being distributed so that the holes are spaced mutually with the spcaing between them being about two to three times their light diameters, and whereby the holes are distributed in a formation ringwise encircling the cylindric periphery of the die elements, i.e. comprising in total some hundred holes contained within each of 20 through 45 ringwise formations encircling the single elements. The dies are employed for pelleting, most often in the manner, that two or three cylindric rolls at distances of about .5 through 1 mm are rolling against the internal surfaces of the cylindric dies. A material to be pelleted, i.e. a feed stuff powder, is supplied to the spacing between the rolls and the inner surface of the die. By means of great pressure the powder is pressed through the single die holes and is shaped into thin bars, which by means of suitable cutting means are cut into suitable lengths at the outer side of the die. Through a die of the aforementioned size, which for instance comprises 10,000 holes, with a light diameter each of about 3 mm, 5 to 10 t of feed stuff may be passing per hour, i.e. per hour a considerable amount of material.

But, experience shows that in course of time unavoidably more and more of the holes become clogged involving a decline in the production which through not further specified reasons by itself results in unwanted halts in the production, whereby halts in the production by themselves may cause a clogging of holes in the dies. But, much clogging of the holes is caused by small pieces of metal which in one way or another is present in the feed stuff mixtures. But, partially clogged peripheral portions of the dies may be caused by erroneous feed stuff mixtures or through a wear-down of counter sunk input ends of the die holes, which counter sinking was provided at the manufacture of the dies. Clogging may also be the result of a deforming of the feed stuff input ends of the holes by the pressing rolls due to too large pressure being provided by them when they during manufacturing of feed stuff pellets are pressing against the inner side of the dies, etc. Dies causing reduced production have to be exchanged with dies giving optimum of production. As the dies are rather expensive it is wanted to get them restored. Unto now this has been provided by means of a simple drilling process taking place by means of manually guided drilling machines, as this manner of restoring the dies is more efficient than using a pillar drill because pillar drills leave more broken drills sticking unremovably in the die holes as compared to a manual restoring procedure. When employing the dies for pelletizing the single holes suffers a wear-down providing them with a conical shape having the largest light diameters at the feed stuff material input end of the holes. The manual drilling procedure is rather slow. As the dies are expensive it nevertheless pays off. In this respect it should be noticed that the problem exists to avoid a deteriorating of the shape of the holes during restoring the dies, because it is important to get the internal surfaces of the holes as even as possible. This has shown itself to be difficult. When putting the dies to operation a suitable hole polishing means often has been brought first to pass through the dies, or a feed stuff mixture with such properties is at first let through the die holes when restoring the operation of the dies.

To clean the dies manual washing has been tried, but, so strong force is required applied to the washing water that a washing water jet is not controllable.

Experience has on the other hand shown, if very large water pressures are used, i.e. larger than 400 b, then it is possible to achieve an effective cleaning of such clogged holes so that few or practically none remain clogged.

To achieve a sufficiently cheap restoring of the dies a high degree of mechanizing has to be attained because it is not possible while cleaning optically to attain a satisfactory positioning of such powerful water jet towards a hole to be cleaned. Moreover, as little span of time as possible has to be used for the positioning of the water jet towards a hole to be cleaned, but, such water jet has the tendency to be positionally locked somewhere along its path when moved, because it has the same inherent capacity as a broad jet of water which directed upwards from below is able to carry, as rotational objects shaped, bodies, such as evenly shaped balls. It must be admitted that the first trials of handling such a powerful water jet were more or less blindfolded carried out, but, trials with fast positioning and to the purpose suitable fast position adjusting and in general by one step right-position-acquiring moving around of the water jet show that it without damaging the steel material of the die which steel material is hardened steel material is possible to move or displace a thin water jet of this kind from one hole to a neighbouring hole for the cleaning hereof.

If the displacing is too short the water jet shows a tendency to be locked in position at the middle of the material wall between the two holes. On the other hand, if the hole sufficiently fast is hit the water jet will lock to the middle of the hole. This locking is due to the returning water from the spot being met by the jet. It has later been found, that a cleaning is achieved if a water jet of the mentioned pressure has a suitable small diameter, which is somewhat less than the diameter of the hole, with an optimum hereof being approximately half the diameter of the hole. The jet thus has to keep itself locked to the hole being cleaned, also in case this hole is able to be cleaned only for a fraction of its length. On the other hand, a very high water pressure is required. Holes which are clogged with feed stuff are fairly fast becoming cleaned with the feed stuff bulletlike leaving the hole. Severely clogged holes may require more seconds with water jet treatment before a cleaning is attained.

Experience shows that the thin cutting jet apparently does not damage the die material. On the other hand, the energy supplied to the water jet and to the maintaining of it is considerable, i.e. 50 through 75 kw are required for a 1 through 3 mm thick water jet, resulting in powerful heating of the water. Wherefore, the water before it possibly for reuse is led to a storage tank has to be cooled.

According to the invention, summarizing, the procedure for cleaning of holes as specified in the introduction thus can be characterized through the procedure steps as specified by the characterising part of claim 1.

The procedure has furthermore to be thus understood that in principle the water jet may be exchanged with a drilling means, and in that those steps of the procedure which thus are influenced herethrough may be carried out as the first respectively as the last steps of the procedure. According to the invention it is thus foreseen that further procedure steps may be applied to the procedure by which the water jet is substituted with a drilling or cleaning means which solely is able to perform cleaning of the area at one end of the holes, and whereby the detecting means is provided able to detect terminated cleaning of the single areas of these ends of the holes.

It is to be noticed, that these procedure steps as well may relate to cleaning of the same end, as respectively of the opposite end, of the holes to be cleaned through the use of the invention. It is also according to the invention foreseen, that the cleaning water jet may be provided able to clean in a usual direction as well as in the opposite direction through the holes. This facility is described more closely as follows later.

Furthermore, it is to be noticed, that according to the invention it is foreseen that the cleaning water jet under an extremely high pressure is emitted from a nozzle and leaves this with approximately supersonic, respectively with supersonic, speed as compared to the surrounding atmosphere around the locality to be cleaned. Though, it is to be noticed, that conditions may be thought of where the problems which are to be solved by means of the invention are met at water jets or at jets of other media where the particles of the jet assume much smaller speeds.

As already hinted at, that it according to the invention may be advantageous, in particular in case of non-succeeded cleaning, to bring cleaning operation to halt which according to the procedure may be provided in that the memory means is provided with means which at non-detecting of emissions of water; clogging material from the respective hole, respectively of non-terminated cleaning of a hole area, at the elapse of a certain time of operation is able to release a signal to the running of the following procedure-step, respectively running of a halt-providing operational routine.

A further development according to the invention connected with the procedure can be that the mentioned elapse of time of operation in case of water as cleaning means is 10 through 30 times the expected operational cleaning time per hole, and/or the memory means comprises means to up-count and/or to determine the frequency of appearing non-fulfilled cleanings of holes and for provision of alarm of error conditions and for possible issuing of signals for the providing of a halt of the cleaning operation.

The invention furthermore relates to an apparatus for the carrying out of the procedure. Such apparatus can be characterized in that is provides the features set out in claim 7.

In the apparatus the die with holes or passages to be cleaned may be arranged in two or more different sub-apparatuses provided for the different kinds of hole or passage cleaning means, and of which at least one is a water jet cleaning means.

It is to be noticed, that the described procedure also takes into consideration that, although at the manufacturing of the pelletizing dies accurately operating drilling devices are used, then in case of thin through-holes or passages the drills may have been bending sidewards during the drilling operation due to the elasticity of the drills. Of this reason some of the through-holes may happen to be somewhat oblique oriented. But, during the cleaning no damages of the holes takes place including those of even rather oblique orientation. On the other hand, the described device for positioning of the cleaning means is able to function effectively despite of the through-holes being unprecise located as due to such unprecise orientation of the drills.

It is further noticed, that the positioning of the cleaning means above a first die opening to be cleaned has to take place manually, whereupon the actual cleaning means is put into operation and sequentially the cleaning operations of the single through-holes or openings in the die is automatically brought to be carried out.

It is also to be noticed, that the procedure according to the invention also is applicable for holes or openings which do not present a tube shaped or conical shaped passage through the die, but may be composed of more cylindric shaped portions of different light, i.e. such as stepwise tapering light or a mixture of any such light and conically tapering lights.

In dies as the mentioned pelletizing dies for feed stuff material pellets some 10,000 through 15,000 holes are comprised in each die. According to the invention some .1 through 10 seconds of time is required for the cleaning of the single holes or openings by means of the procedure.

It is further to be noticed, that the aforementioned detecting means enabling a detecting of achieved cleaning of the single holes comprises mechanical, and in particular movable, means or members against which material and cleaning medium from the cleaned holes abuts. By giving these a suitable suspension and shape, such as to describe as follows, a certain throw-back of cleaning medium, such as water, against the rear end of the cleaned openings may be attained advantageously providing a simultaneous cleaning of the rear ends of the die holes or openings.

Embodiments according to the invention are described in more details in the following under reference to the drawing, wherein:
- FIG 1: in the perspective and schematically and having a portion of the protective housing cut away illustrates an embodiment of, for instance, a water jet apparatus according to the invention,
- FIG 2: is a view from the front along section II-II of the apparatus according to FIG 1 showing more details of a detecting means 3 which as an alternative is supported by a lance 2AA of a nozzle means 2A, and whereby a portion of a die to be cleaned is cut away for better viewing of the detecting means 3,
- FIG 3: illustrates the same members as according to FIG 2, but showing a section more close to the centre of the die 1 and illustrating a variation of the apparatus according to FIG 1 and FIG 2 suited for cleaning of holes in a die 1 and incorporating a cleaning to take place in opposite direction,
- FIG 4: in more details shows an embodiment of a detecting means 3 of the kind shown in FIG 1, FIG 2 and FIG 3, and
- FIG 5: in the perspective and having the two main members of the FIG mutually shown exploded and strongly schematized illustrates a through drill-cleaning operating apparatus according to the invention.

In the FIGs of the drawing elements providing the same or a corresponding function carry the same main sign of reference.

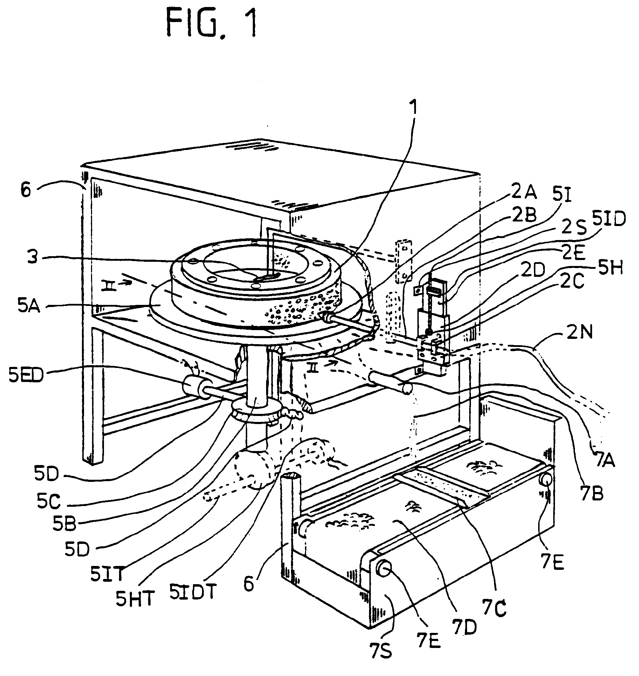

A water jet apparatus according to FIG 1 of the drawing is intended employed for cleaning of clogged radially oriented through-passages, -openings or -holes in a massive cylindric pelletizing die 1 of tempered steel material which is illustrated laying on a for instance horizontally oriented turntable 5A to which the die is for instance fastened rigidly with fastening means which are not shown but may be of per se known kind able to perform a rigid fastening of the die to the table, on one hand to maintain the position of the die on the table 5A on the other hand because a large pressure is exerted through the waterjet arriving at the die from a nozzle 2A on a lance 2AA.

The turntable 5A is sitting on a rotary shaft 5B carried by bearings which are not shown. In principle the table 5A may be arranged displaceable upwards and downwards at its bearings by resting on the periphery of an excentric disc 5HT being shown in dotted line and being located on a to the first mentioned shaft 5B perpendicular arranged and in dotted line shown rotary and through not illustrated bearings suspended shaft 5IT able to be turned by means of a stepmotor 5IDT shown in dotted line. The stepmotor comprises not shown gear means. On the other hand, this device to provide an upwards and downwards displacing of the table 5A is not well suited because the die 1 including the table 5A incorporates a considerable weight, such as 40 through 700 kg. It is thus more advantageous to provide the nozzle 2A as being displaceable upwards and downwards by arranging the lance 2B displaceable upwards and downwards. As through the waterjet from the nozzle 2A large forces exist between the nozzle 2A and the die 1 demands are posed to rather rigid guiding means to provide a mechanical holding of the nozzle 2A in relation to the die 1 which lays on the table 5A.

To enable a turning of the table 5A carrying the die 1 the first mentioned shaft 5B carries a wormwheel 5C rotated by a worm 5D located on a driving shaft 5D driven, such as through a not illustrated gear means, by means of for instance a stepmotor 5ED.
To provide a displacing up and down of the nozzle 2A, the lance 2B is rigidly fastened by means of clamps 2C to a such as in U- or C-shape formed plate means 2D being arranged displaceable up and down on an as rail serving holding means 2E which through further suitable fastening means is located on a supporting means, which here carries reference numeral 6, and by means of which also the table 5A and the driving means belonging to the table are kept properly fastened.

Here, the supporting means is shown as a rigid box-shaped means 6 supported on four legs comprising a cavity, the front of which is to be closed by means of a not illustrated door or cover plate which on the one hand serves to catch water emanating from the nozzle 2A and clogging matter being released from the cleaned holes or openings, and which door or cover plate on the other hand protects the surroundings against water or any other as fluent or rayed, such as in powder shape rayed, matter which with great power is ejected from the nozzle 2A.

To provide a displacing up and down of the nozzle 2A, for instance a threaded shaft 5I is provided which at one end undisplaceably is kept in place by a bearing 5H at the plate means 2D and at the other end is kept rotary in place by means of an internally threaded bearing means, such as the hub of a tooth wheel driven by a drive motor 5ID which thus may be a stepmotor device incorporating a not further illustrated gear means being inserted between the motor and the said toothwheel.

At the embodiment shown in FIG 1 the nozzle 2A through the lance 2B is thought connected to a not illustrated pressurized water producing compressor device.

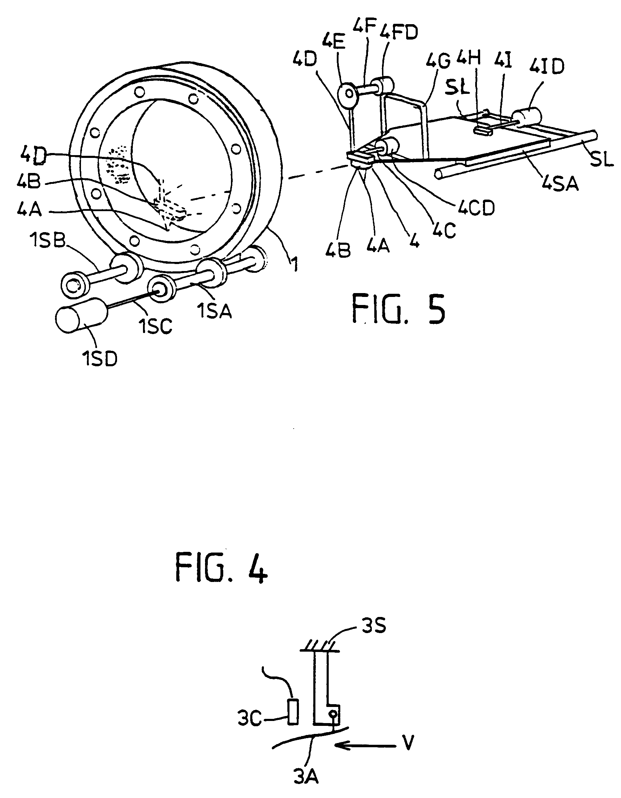

The said stepmotors may be stepmotors of the electric kind which through indicated connecting wires are connected to a not shown control unit issuing the necessary control signals able to control and drive the stepmotors. This electric control unit also comprises a possible memory device or other control means which is connected to a signalling or detecting means 3 to be described with reference to FIG 4 and indicated in FIG 1 and through which the stepwise movings of the die 1 and the nozzle 2A are provided.

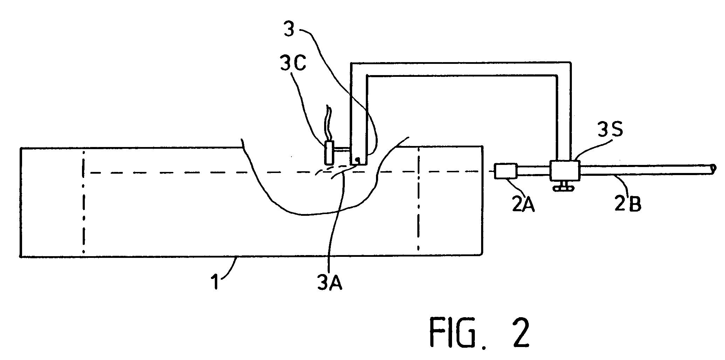

Of FIG 2 which on the other hand illustrates a somewhat different manner of fastening the detecting means 3 it is to be understood that at the piercing through the die 1 a by dotted line indicated waterjet from the nozzle 2A together with ejected clogging matter from the hole or opening in the die 1 is going to hit for instance a slab member 3A being suspended pivotable around a horizontal axis and which slab member 3A through its moving is activating an electric switch or signal means for as long a duration of time as the waterjet is passing through at this detecting means 3.

The stepsize of the mutual moving between the nozzle 2A and the die 1 has to be so adapted that a mutual moving is permitted with an accuracy which is better than equal to the half of the smallest diameter of the holes or openings in concern, i.e. as measured from the middle of a cleaned hole or opening to the next hole or opening to be cleaned and which hole or opening generally, for a given direction of moving, simultaneously is the nearest hole or opening. Experiments have thus shown that a positioning of the holes or openings of a die in front of the nozzle with this accuracy then at the further implementing of the cleaning procedure it is to be regarded as advantageous when the die by means of its suspension and the nozzle by means of its suspension, thus inclusive possible drive means devices enabling the stepwise moving, mutually caused by these suspension and drive device means are kept in position elastically, elastomeric or to a suitable degree by spring means with an accuracy which permits a mutual self-moving of these members with a size of this self-moving to be within the size of the half of the diameter of the smallest hole or opening to be cleaned in the die. In this manner the waterjet from the nozzle 2A is imparted the possibility through its unavoidable mutual influence of moving, existing between the die and the nozzle, itself to provide a centering of the waterjet within the single holes or openings to be cleaned.

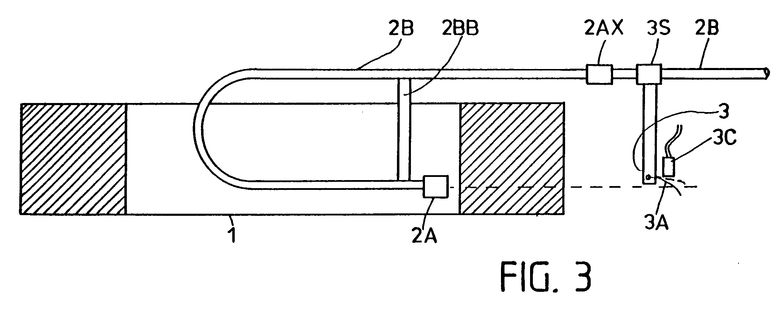

In FIG 2 and FIG 3 embodiments of nozzle devices 2A and cooperating detecting means 3 are illustrated as already mentioned.

Of FIG 2 it is understood that the detecting means 3 comprises a pivotable slab means 3A which through its upwards moving due to influence from the in dotted line indicated and through a hole or an opening in the die arriving waterjet from the nozzle 2A activates a signal means 3C. The detecting means 3 is kept in place by means of a suitable strong holding means 3S at the lance 2B. Experiments have shown that the detecting means 3 is kept well in place by means of for instance a phosphor bronze ribbon having a width of 10 through 30 mm and a thickness of 2 through 5 mm.

According to FIG 3 the nozzle according to FIG 2 by means of for instance a suitable coupling procedure is substituted with a rigid tube joining means 2AX bringing the lance 2B to extend to the nozzle 2A which in this case is arranged turned against the internal wall of the die 1. To achieve a waterjet being as smooth as possible, i.e. apparently as not being ejected as a whirling waterjet, a longer length of the lance 2B is running shaped as a straight length behind the nozzle 2A. To safeguard a suitably fastened keeping in place of the nozzle 2A a connecting strut member 2BB is arranged for the lance 2B. In this case the waterjet from the nozzle 2A is going to pass through the die 1 in opposite direction as compared to the direction at the embodiments according to FIG 1 and FIG 2. In case of dies fitted with very long and narrow holes or openings, i.e. such as having lengths greater than 15 cm and diameters of the holes or openings smaller than 5 mm, it may be necessary to do a cleaning in both directions through the holes or openings to achieve that all clogging matter or rests thereof is removed from the holes or openings, because an avoidable returning jet from the water-jet at the passage through the narrow holes or openings makes it difficult to achieve a full-cleaning of the single holes or openings in their entire lengths.

A possible embodiment of the detecting means 3 is more clearly illustrated in FIG 4. Though, the suspension 3S is only indicated. On the other hand, it is shown that the pivotable slab means 3A is somewhat S-shaped. This shape has shown itself advantageous in relation to the waterjet which is indicated by means of an arrow V. Through this embodiment two advantages are attained, namely firstly in that it is counteracted that the waterjet influences mechanically strongly eroding on the materials which the jet hits, and thus the indicated shape is advantageous in that a low degree of erosion is achieved, and secondly in that water which hits this pivotable slab means is brought to sprinkle in different directions. The sprinkling which is achieved has shown itself to be effective in suitably rincing the surface of the dies which have become dirty by being covered with feed pellet material when the dies were used for pelletizing, and thus the surroundings of the holes or openings are cleaned for adherent pellet material. This effect is in particular advantageous when the detecting means 3 with the pivotable slab means is located at the open inner range of the die.

In FIG 1 it is furthermore illustrated that material being caught by the housing 6 within the housing is led to an outlet tube 7A and in shape of a ray 7B to a water cleaning filtre 7D and through a collecting channel 7C. The water cleaning filtre 7D catches solid particles and is able collecting to be turned forward by being pulled by driving rolls at 7E arranged at a box 7S belonging to the water cleaning filtre. Water, having passed through the apparatus and the die, from the very hot condition existing for the arriving mixture of water and clogging matter is for instance led to a cooling device, such as of cooling tower type, and from there to a water supply able to deliver water for a renewed passage through a compressor device providing, by passing the water through the nozzle 2A, a waterjet exhibiting very high water pressure. The provided waterjet then only has a thickness of approximately the size of the half of the smallest hole or opening to be cleaned by means of the apparatus.

To achieve a cleaning of the external ranges of the holes or openings when performing the cleaning it often may be advantageous, at least at one end of the holes or openings, to perform an afterdrilling of these external ranges by employing for instance a counter-sinking-providing apparatus as described earlier.

The essential members belonging to such an apparatus are shown in FIG 2. A drill 4A is bearing supported by a holding means 4B and is driven by means of a drilling drive means 4CD through a shaft 4C and through a not illustrated gear means which for instance may be located in the holding means 4B. The holding means permits through an up and down displaceable means 4D a corresponding up and down moving of the drill 4A controlled by a plate shaped excenter means 4E located on a shaft 4F driven by a step-motor 4FD. This is carried by a supporting means 4G which together with the holding means 4B and the drill drive motor 4CD is located on an on rails to and fro movable supporting means which through suitable sliding bearing means 4SA rests on rails SL. An in relation to the rails SL stationary stepmotor 4ID is through a not illustrated gear means through a for instance indicated threaded shaft 41 and through a with internal thread fitted hub provided toothwheel as bearing 4H able to drive the supporting means to and fro on the rails SL. The complete portion of the apparatus carries reference numeral 4 and can as shown in the left hand portion of FIG 2 be located in position within a die 1. The die 1 rests between two supporting plate means located on two, here as horizontally oriented, shown shafts 1SA and 1SB, of which one of them 1SA through a shaft extension 1SC is able to be rotated by means of a stepmotor 1SD through for instance a gear means which is not illustrated.

At the portion of the apparatus illustrated in FIG 2 the stepmotors 1SD and 4ID correspond to the stepmotors 5ED and 5ID according to FIG 1 in what relates to the providing of a mutual moving between the working members, namely respectively 4A and 2A, and the holes or openings to be cleaned in the die 1. The mutual moving may in both cases be controlled in the same manner in that the detecting means 3, which was described under reference to embodiments according to FIG 1, when employing a working member 4A is thought substituted by a corresponding one which for instance is mounted so that it is connected with the up-down-movable means 4D or with the excentric plate means 4E, and whereby the detecting means indicates satisfactory done drill-cleaning-operations when cleaning the single holes or openings of a die 1. When employing such kind of detecting, step-moving mtutally between the working means 4A and the die 1 to achieve poitioning, is provided in the same manner as earlier described, such as to attain the required positioning for carrying out of a cleaning of the next hole or opening of the die.

Without specifically describing details a counter may be used for counting the amount of cleaned holes or openingswhereby the counting is carried out in one direction or the other for instance around along or across the embodied ring shape of a die, i.e. a successive counting of cleaned holes or openings is carried out unto a wanted amount of holes or openings is reached, whereafter the cleaning is brought to continue with another successive row of holes or openings along or across the ring shape of the die, etc. Such counter devices are known and belong to the state of the art and need no further description.

It has to be noticed, that experience shows that only comparatively few cases are found, where ejected matter from a hole or from an opening hits the opposite wall in the die so that a part of this matter is able to penetrate into a hole or an opening and remains sticking there. Thus, experience shows that a blowing of the die with pressurised air after the carrying out of the described cleaning according to the invention, in practice removes all remaining rests of matter from the holes or openings including such matter which during the cleaning was brought to stick in the holes or openings again.

## Claims

1. A procedure for cleaning of clogged holes or passages of small diameter, such as through-holes of varying sizes, in particular such holes in dies provided with a large amount of such holes for through-pressing of materials for the manufacturing of pellets, such as dies employed at pelletizing of feed stuff pellets, **characterized** in the following procedure steps, wherein the objects with clogged holes to be cleaned are dies, and in that the die is located on a suitable supporting means including holding means for the fastening of the die in relation to a water jet means, whereby these said holding means comprise activatable position adjusting means for adjusting or readjusting the said fastened mutually fixed holding position, which fastening, possibly by means of a minor flexibility and/or spring induced flexibility, is only substantially fixed, and in that a water jet with an accuracy of size being within the half of the smallest hole diameter or better with a diameter being of size less than the half of the smallest hole diameter is directed against the first hole to be cleaned in the direction of the longitudinal orientation of the hole, and in that the degree of mutual fixation between the mentioned elements is maintained to such a degree so that the flexibility of the fixation permits relatively a mutual moving between these said elements to be less than the said half hole diameter of the smallest hole in the die to be cleaned, and in that behind the hole are arranged detecting means which detect the arrival of water/clogged material from the rear end of the hole and activate memory means resulting in either stopping of the cleaning operation or in mutual displacement taking place through activation of the said position adjusting or readjusting means for the die or water jet with a mutual displacement corresponding to the mutual spacing between the centre of the cleaned hole and the centre of the next hole to be cleaned with an accuracy of the displacement being better than the half of the smallest hole diameter; the respective above steps being repeated in order to clean subsequent holes.

2. Procedure according to claim 1 **characterized** in that further procedure steps are applied to the procedure by which the water jet is substituted with a drilling or cleaning means which solely is able to perform cleaning of the area at one end of the holes, and whereby the detecting means is provided able to detect terminated cleaning of the single areas of these ends of the holes.

3. Procedure according to claim 1 or 2 **characterized** in that the cleaning water jet may be provided able to clean in a usual direction as well as in the opposite direction through the holes.

4. Procedure according to claim 1, 2 or 3 **characterized** in that the cleaning water jet under an extremely high pressure is emitted from a nozzle and leaves this with approximately supersonic, respectively with supersonic, speed as compared to the surrounding atmosphere around the locality to be cleaned.

5. Procedure according to claim 1, 2, 3 or 4 **characterized** in that the memory means is provided with means which at non-detecting of emissions of water/ clogging material from the respective hole, respectively of a non-terminated cleaning of a hole area, at the elapse of a certain time of operation is able to release a signal to the running of the following procedure-step, respectively running of a halt-providing operational routine.

6. Procedure according to claim 5 **characterized** in that the mentioned elapse of time of operation in case of water as cleaning means is 10 through 30 times the expected operational cleaning time per hole, and/or the memory means comprises means to up-count and/or to determine the frequency of appearing non-fulfilled cleanings of holes and for provision of the alarm of error conditions and for possible issuing of signals for the providing of a halt of the cleaning operation.

7. Apparatus for the carrying out of the procedure according to claim 1, 2, 3, 4, 5 or 6 **characterized** in that such apparatus comprises stepmoving-means, possibly lift-and-turn-step-moving-means, for the mutual displacing between cleaning means and die with holes or passages to be cleaned, whereby the accuracy of the length of the steps is better than, i.e. in step lengths shorter than, or equal to the half of the smallest diameter of the holes or the passages to be cleaned.

8. Apparatus according to claim 7 **characterized** in that the die with holes or passages to be cleaned is arranged in two or more different sub-apparatuses provided for the different kinds of hole or passage cleaning means, and of which at least one in a water jet cleaning means.

9. Apparatus according to claim 7 **characterized** rized in that the aforementioned detecting means enabling a detecting of achieved cleaning of the single holes comprises mechanical, and in particular movable, means or members against which material and cleaning medium from the cleaned holes abuts.

10. Apparatus according to claim 9 **characterized** in that the detecting means (3) by way of example in longitudinal section is a S-shaped pivotable slab means (3A) being pivotably supported by a suitable strong, i.e. rigid, carrying suspension (3S).

## Patentansprüche

1. Ein Verfahren zur Reinigung von verstopften Löchern oder Durchgängen kleinen Durchmessers, wie Durchgangslöchern sich ändernder Größen, insbesondere Löchern in Preßringen, die, wie beim Pelletisieren von Futtermittelpellets angewendete Preßringe, mit einer großen Anzahl derartiger Löcher für das Durchpressen von Stoffen zur Herstellung von Pellets versehen sind, gekennzeichnet durch die folgenden Verfahrensschritte, bei denen die Gegenstände mit zu reinigenden verstopften Löchern Preßringe sind; und dadurch, daß der Preßring auf einem geeigneten, Haltemittel für die Befestigung des Preßrings in Beziehung zu einem ein Wasserstrahlmittel einschließenden Tragmittel angeordnet wird, wobei diese besagten Haltemittel Betriebsstellungs-Justagemittel zum Einstellen oder Nachstellen der besagten festgesetzten, gegenseitig fixierten Halteposition umfassen und die Betätigung nur im wesentlichen gegebenfalls mittels einer geringfügigen und/oder federinduzierten Elastizität festgelegt wird; und daß ein Wasserstrahl mit einem Größengenauigkeitsgrad, der innerhalb der Hälfte des kleinsten Lochdurchmessers liegt, oder besser mit einem Durchmesser, dessen Größe geringer als die Hälfte des kleinsten Lochdurchmessers ist, gegen das erste zu reinigende Loch in Richtung der Längsorientierung des Loches gerichtet wird; und daß der Grad der gegenseitigen Fixierung zwischen den genannten Elementen in einem solchen Maß aufrechterhalten wird, daß die Flexibilität der Fixierung eine Bewegung relativ zwischen diesen besagten Elementen zuläßt, die geringer ist als der besagte halbe Lochdurchmesser des kleinsten Loches in dem zu reinigenden Preßring; und daß hinter dem Loch Detektionsmittel angeordnet sind, die das Ankommen von Wasser/ Verstopfungsmaterial vom hinteren Ende des Loches feststellen und Speichermittel aktivieren, was entweder zum Anhalten des Reinigungsvorgangs oder zu gegenseitiger Verschiebung führt, die durch Betätigung des besagten Positionseinstell- oder -nachstemlmittems für den Preßring oder den Wasserstrahl mit gegenseitiger Verschiebung entsprechend dem gegenseitigen Abstand zwischen der Mitte des gereinigten Loches und der Mitte des nächsten zu reinigenden Loches mit einer Verschiebungsgenauigkeit stattfindet, die höher als die Hälfte des kleinsten Lochdurchmessers ist; wobei die jeweiligen oben genannten Schritte zur Reinigung folgender Löcher wiederholt werden.

2. Verfahren nach Anspruch 1, dadurch gekennzeichnet, daß in dem Verfahren weitere Verfahrensschritte angewendet werden, durch die der Wasserstrahl durch ein Bohr- oder Reinigungsmittel ersetzt wird, das allein imstande ist, die Reinigung des Bereichs an einer Seite der Löcher durchzuführen, und bei denen das vorgesehene Detektionsmittel die abgeschlossene Reinigung der einzelnen Bereiche dieser Enden der Löcher feststellen kann.

3. Verfahren nach Anspruch 1 oder 2, dadurch gekennzeichnet, daß der Reinigungswasserstrahl zum Reinigen sowohl in einer üblichen Richtung als auch in der engegengesetzten Richtung durch die Löcher vorgesehen werden kann.

4. Verfahren nach Anspruch 1, 2 oder 3, dadurch gekennzeichnet, daß der Reinigungswasserstrahl unter extrem hohem Druck aus einer Düse ausgestoßen wird und diese annähernd mit Überschall bzw. mit Überschallgeschwindigkeit im Vergleich zu der die zu reinigende Stelle umgebenden Atmosphäre verläßt.

5. Verfarhren nach Anspruch 1, 2, 3 oder 4, dadurch gekennzeichnet, daß das Speichermittel mit Mitteln versehen ist, die bei Nichtfeststellung des Ausstoßes von Wasser/ Verstopfungsmaterial aus dem jeweiligen Loch bzw. bei nicht beendeter Reinigung eines Lochbereiches nach Verstreichen einer bestimmten Betriebszeitein Signal für die Durchführung des folgenden Verfahrensschritts bzw. die Durchführung eines Raltebetriebsprogramms auslösen können.

6. Verfahren nach Anspruch 5, dadurch gekennzeichnet, daß die genannte verstrichene Betriebszeit im Fall von Wasser als Reinigungsmittel das Zehn- bis breißigfache der erwarteten Reinigungsbetriebszeit pro Loch beträgt, und/ oder das Speichermittel Mittel zum Aufwärtszählen und/ oder Bestimmen der Häufigkeit des Auftretens nicht ausgeführter Reinigungen von Löchern und zur Meldung von Fehlerbedingungen und zum möglichen Abgeben von Signalen für das Vorsehen einer Unterbrechung des Reinigungsvorgangs umfaßt.

7. Vorrichtung zur Durchführung des Verfahrens nach Anspruch 1, 2, 3, 4, 5 oder 6, dadurch gekennzeichnet, daß eine derartige Vorrichtung Schrittbewegungsmittel, gegebenenfalls Hub-und-Dreh-Schrittbewegungsmittel, für die gegenseitige Verschiebung zwischen Reinigungsmittel und Preßring mit zu reinigenden Löchern oder Durchgängen umfaßt, wobei die Genauigkeit der Länge der Schritte besser als, d. h. in Schrittlängen kürzer als die oder gleich der Hälfte des kleinsten Durchmessers der zu reinigenden Löcher oder Durchgänge ist.

8. Vorrichtung nach Anspruch 7, dadurch gekennzeichnet, daß der Preßring mit zu reinigenden Löchern oder Durchgängen in zwei oder mehr unterschiedlichen Teilvorrichtungen angeordnet ist, die für die verschiedenen Arten von Loch- oder Durchgangsreinigungsmitteln vorgesehen sind und von denen mindestens eine ein Wasserstrahlreinigungsmittel ist.

9. Vorrichtung nach Anspruch 7, dadurch gekennzeichnet daß das vorerwähnte Detektionsmittel, das ein Feststellen der erzielten Reinigung eines Einzelloches ermöglicht, mechanische und insbesondere bewegliche Mittel oder Teile umfaßt, gegen die Material und Reinigungsmittel von den gereinigten Löchern stößt.

10. Vorrichtung nach Anspruch 9, dadurch gekennzeichnet, daß das Detektionsmittel (3) beispeilsweise in einem Längsabschnitt ein S-förmiges schwenkbares Plattenmittel (3) ist, das von einer Aufhängung (3S) schwenkbar getragen ist.

## Revendications

1. Procédé pour nettoyer des passages ou des trous obstrués de petit diamètre, tels que des trous débouchants de dimensions variables, en particulier des trous dans des moules munis d'un grand nombre de tels trous pour le moulage de matières pour la fabrication de boulettes, tels que des moules utilisés pour la pelletisation de boulettes de matière alimentaire,
caractérisé par les étapes de procédé suivantes dans lesquelles les objets ayant des trous obstrués à nettoyer sont des moules, et en ce que le moule est situé sur des moyens de support appropriés incluant des moyens de maintien pour la fixation du moule par rapport à des moyens à jet d'eau, lesdits moyens de maintien comprenant des moyens de réglage en position actionnables pour ajuster ou réajuster ladite position de maintien mutuellement fixée, laquelle fixation, éventuellement par l'intermédiaire d'une élasticité mineure et/ou d'une élasticité induite par ressort, est seulement sensiblement fixée, et en ce qu'un jet d'eau, ayant une précision en dimension inférieure à la moitié du diamètre du plus petit trou ou mieux, avec un diamètre de dimension inférieure à la moitié du diamètre du plus petit trou, est dirigé contre le premier trou à nettoyer dans la direction de l'orientation longitudinale du trou, et en ce que le degré de fixation mutuelle entre les éléments mentionnés est maintenu à tel point que l'élasticité de la fixation permet relativement un déplacement mutuel entre ces éléments, inférieur à ladite moitié du diamètre du plus petit trou dans le moule à nettoyer, et en ce que, derrière le trou, sont agencés des moyens de détection qui détectent l'arrivée d'eau/matière obstruée de l'extrémité arrière du trou et activent des moyens de mémoire aboutissant soit à l'arrêt de l'opération de nettoyage ou à un déplacement mutuel se produisant par l'activation desdits moyens d'ajustement ou de réajustement en position pour le moule ou le jet d'eau, avec un déplacement mutuel correspondant à l'espacement mutuel entre le centre du trou nettoyé et le centre du prochain trou à nettoyer avec une précision de déplacement meilleure que la moitié du diamètre du plus petit trou ; les étapes respectives ci-dessus étant répétées afin de nettoyer les trous subséquents.

2. Procédé selon la revendication 1,
caractérisé en ce que d'autres étapes sont prévues dans le procédé par lesquelles le jet d'eau est remplacé par des moyens de nettoyage ou de perçage qui sont uniquement capables de réaliser le nettoyage de la zone à une extrémité des trous, et en ce que les moyens de détection sont prévus pour être capables de détecter le nettoyage terminé des zones individuelles de ces extrémités de trous.

3. Procédé selon la revendication 1 ou 2,
caractérisé en ce que le jet d'eau de nettoyage peut être prévu pour être capable de nettoyer dans une direction usuelle, ainsi que dans la direction opposée à travers les trous.

4. Procédé selon la revendication 1, 2 ou 3,
caractérisé en ce que le jet d'eau de nettoyage, sous une pression extrêmement élevée, est émis à partir d'une buse et sort de celle-ci avec une vitesse approximativement supersonique, respectivement supersonique, comme comparé à l'atmosphère environnante autour de l'emplacement à nettoyer.

5. Procédé selon la revendication 1, 2, 3 ou 4,
caractérisé en ce que les moyens de mémoire sont munis de moyens qui, à une non-détection des émissions d'eau/matière obstruante du trou respectif, respectivement d'un nettoyage non terminé d'une zone du trou, à un écoulement d'un certain temps de fonctionnement, sont capables de délivrer un signal pour la mise en oeuvre de l'étape suivante du procédé, respectivement la mise en oeuvre de l'étape suivante du procédé, respectivement la mise en oeuvre d'une routine opératoire fournissant l'arrêt.

6. Procédé selon la revendication 5,
caractérisé en ce que l'écoulement de temps mentionné du fonctionnement dans le cas de l'eau comme moyens de nettoyage est de 10 à 30 fois le temps de nettoyage opérationnel attendu par trou, et/ou les moyens de mémoire comprennent des moyens pour compter et/ou pour déterminer la fréquence d'apparition des nettoyages de trous non-accomplis et pour fournir l'alarme de conditions d'erreur et pour délivrer éventuellement des signaux pour l'arrêt de l'opération de nettoyage.

7. Appareil pour la mise en oeuvre du procédé selon la revendication 1, 2, 3, 4, 5 ou 6,
caractérisé en ce qu'un tel appareil comprend des moyens de déplacement pas-à-pas, éventuellement des moyens de déplacement pas-à-pas tournant et s'élevant, pour le déplacement mutuel entre les moyens de nettoyage et le moule ayant des trous ou des passages à nettoyer, la précision de la longueur des pas étant meilleure que, c'est-à-dire ayant des longueurs de pas plus courtes que, ou égales à la moitié du plus petit diamètre des trous ou des passages à nettoyer.

8. Appareil selon la revendication 7,
caractérisé en ce que le moule ayant des trous ou des passages à nettoyer est agencé dans deux ou plusieurs sous-appareils différents, prévus pour les différentes sortes de moyens de nettoyage des trous ou passages et dont au moins un correspond aux moyens de nettoyage à jet d'eau.

9. Appareil selon la revendication 7,
caractérisé en ce que les moyens de détection ci-dessus mentionnés, permettant la détection du nettoyage réalisé des trous individuels, comprennent des moyens ou des organes mécaniques, et en particulier mobiles, contre lesquels la matière et l'agent de nettoyage des trous nettoyés viennent en butée.

10. Appareil selon la revendication 9,
caractérisé en ce que les moyens de détection (3), à titre d'exemple en coupe longitudinale, sont des moyens (3A) à plaque en forme de S, supportés, de façon pivotante, par une suspension portante (3S) appropriée résistante, c'est-à-dire rigide.
